# FASCICULE DE BREVET EUROPEEN

(11) **EP 4 065 452 B1**
(45) Date de publication et mention de la délivrance du brevet: **04.09.2024**
(21) Numéro de dépôt: 20820502.1
(22) Date de dépôt: 24.11.2020
(51) Int. Cl.: B62D 55/24

(54) **BANDE DE ROULEMENT D'UNE CHENILLE POUR VEHICULE**
LAUFFLÄCHE EINER FAHRZEUGRAUPE
TREAD FOR AN ENDLESS TRACK OF A VEHICLE

(30) Priorité: 25.11.2019 FR 1913146
(43) Date de publication de la demande: 05.10.2022
(73) Titulaire: COMPAGNIE GENERALE DES ETABLISSEMENTS MICHELIN, 63000 Clermont-Ferrand (FR)
(72) Inventeur: PERRIN, Frédéric, 63040 CLERMONT-FERRAND CEDEX 9 (FR); DEAN, David, 63040 CLERMONT-FERRAND CEDEX 9 (FR); PRAS, Maxime, 63040 CLERMONT-FERRAND CEDEX 9 (FR)
(74) Mandataire: M.F.P. Michelin
(86) Numéro de dépôt international: PCT/FR2020/052153
(87) Numéro de publication internationale: WO 2021/105602

(56) Documents cités:
- EP-A1- 1 197 515
- EP-A1- 3 133 000
- EP-B1- 3 133 000
- WO-A1-00/01570
- DE-A1- 2 020 672
- ANONYMOUS: "Gummiketten in HD-Qualität von LIS - Baumaschinen Wartung, Reparatur & Diagnose - Baumaschinen & Bau Forum - Bauforum24", 15 April 2009 (2009-04-15), pages 1 - 4, XP055721483, Retrieved from the Internet <URL:https://www.bauforum24.biz/forums/topic/34272-gummiketten-in-hd-qualitat-von-lis/> [retrieved on 20200811]

## Description

### DOMAINE DE L'INVENTION

La présente invention concerne des chenilles en caoutchcouc pour véhicules, et plus particulièrement des chenilles en caoutchouc pour engins agricoles, de génie civil, ou militaire dont la performance en traction en terrain meuble est améliorée, et plus particulièrement des bandes de roulement pour chenilles en caoutchcouc.

L'invention sera plus particulièrement décrite en référence à un véhicule polyvalent c'est à dire un véhicule pouvant rouler aussi bien dans les champs en terrain meuble que sur route, tel qu'un tracteur agricole.

Par caoutchouc ou matière caoutchoutique ou mélange de gomme, on désigne toute matière élastomérique comportant au moins un élastomère pouvant être renforcé par au moins une charge de renforcement telle que par exemple du noir de carbone.

Une bande de roulement pour chenille en caoutchouc pour véhicule comprend notamment :
a. une bande, comprenant du caoutchouc et une armature de renforcement, formant une boucle fermée suivant une direction longitudinale, de largeur donnée dans une direction transversale, présentant une surface intérieure, destinée à coopérer avec des moyens d'entraînement de la chenille, et une surface extérieure, destinée à entrer en contact avec un sol,
b. une pluralité d'éléments en reliefs, ci-après désignés blocs de sculpture ou plus simplement blocs, destinés à venir en contact avec le sol pour assurer une bonne motricité au véhicule équipé de cette chenille, et s'étendant à partir d'une surface portante jusqu'à la surface extérieure,
c. une pluralité de dents, s'étendant à partir de la surface intérieure vers l'intérieur de la chenille, destinées au moins au guidage de cette chenille, ou tout autre dispositif qui assure le rôle de transmission des efforts d'entraînements de la chenille, l'entraînement étant réalisé par des moyens tels qu'au moins une roue disposée à l'intérieur de la chenille.

Compte tenu des efforts supportés par une chenille montée sur un véhicule, il est connu de prévoir à l'intérieur de la bande au moins une armature de renforcement assurant la stabilité dimensionnelle de la chenille dans la direction longitudinale correspondant à la direction de la boucle formée par ladite chenille. Cette armature de renforcement est en général composée d'une pluralité de câbles disposés dans la direction longitudinale ou bien d'un câble enroulé selon un angle relativement faible avec ladite direction de manière à conférer à la bande une rigidité d'extension appropriée dans la direction longitudinale pour résister aux efforts en cours d'utilisation. Il est encore usuel de prévoir d'ajouter une armature supplémentaire de renforcement comportant un empilement de nappes formées chacune d'une pluralité de câbles ou fils de renfort disposés parallèlement les uns aux autres et pouvant se croiser d'une couche à une autre.

La capacité de la chenille à transmettre l'énergie rotative de la transmission au sol est très liée à la sculpture de la bande de roulement située sur la face extérieure en contact avec le sol. Une chenille ne doit pas patiner, c'est-à-dire glisser sans avancer par manque d'adhérence. Aussi la sculpture est-elle généralement munie de blocs en relief situés sur la face extérieure de la bande de roulement, et séparés les uns des autres par des découpures

La bande de roulement de la chenille est destinée à rouler sur divers types de sols tels que la terre plus ou moins compacte des champs, les chemins non goudronnés d'accès aux champs et les surfaces goudronnées des routes. Compte tenu de la diversité de l'usage, en champ et sur route, la bande de roulement de la chenille doit présenter un compromis de performances entre la traction en champ, la résistance aux arrachements, la résistance à l'usure sur route, la résistance au roulement, le confort vibratoire sur route.

### DEFINITIONS

A la chenille est associé un repère global (O, X, Y, Z) dans lequel O est le centre géométrique de la chenille, l'axe (OY) est l'axe de rotation de la roue d'etrainement de la chenille, l'axe (OX) est perpendiculaire à (OY) et orienté dans le sens de la plus grande dimension ou longueur de la chenille, et enfin l'axe (OZ) est orthogonal au plan formé par les axes (OX) et (OY).

Par direction transversale, on entend une direction parallèle à l'axe (OY) de rotation de la chenille.

Par direction longitudinale (OX), on entend une direction orientée selon la grande longueur de la chenille dans le sens de roulement.

Par direction verticale, on entend dans le présent document toute direction qui est perpendiculaire à l'axe de rotation de la roue d'entraînement de la chenille et à l'axe longitudinal. Cette direction correspond à la direction de l'épaisseur de la bande de roulement et est généralement référencée (OZ).

Par direction normale on entend la direction perpendiculaire à la surface extérieure et orientée vers l'extérieur de la chenille.

Par « incision », on entend une découpure générant des parois de matière opposées. La distance entre les parois de matière de l'incision est appropriée pour permettre la mise en contact au moins partielle de ces parois lors du passage dans l'aire de contact avec le sol.

Par « rainure », on entend une découpure générant des parois de matière opposées. La distance entre les parois de matière de la rainure est telle que ces parois ne peuvent venir en contact l'une contre l'autre dans des conditions usuelles de roulage.

Les éléments de sculpture de la bande de roulement sont des éléments volumiques en relief par rapport à la surface portante, également désignés « blocs » et comprennent une face d'attaque, une face de contact et une face de fuite.

A titre d'exemple, dans le cas d'éléments de sculpture comprenant deux rangées de blocs de type barrettes en V ou en chevrons, la chenille a un sens de rotation préférentiel selon la pointe des chevrons. La face d'attaque est, par définition, la face dont l'arête orientée vers l'extérieur dans la direction normale ou arête d'attaque, entre en premier en contact avec le sol, lors du passage de la barrette dans l'aire de contact de la chenille avec le sol, au cours de la rotation de la chenille. La face de fuite est, par définition, la face dont l'arête orientée vers l'extérieur dans la direction normale ou arête de fuite, entre en dernier en contact avec le sol, lors du passage de la barrette dans l'aire de contact de la chenille avec le sol, au cours de la rotation de la chenille. Selon le sens de rotation, la face d'attaque est dite en avant par rapport à la face de fuite.

Le « taux d'entaillement volumique » de la sculpture de la bande de roulement est défini comme étant le rapport entre le volume total des rainures séparant les éléments en relief et le volume total de la bande de roulement supposée non entaillée, compris entre la surface de fond et la surface de roulement. Le taux d'entaillement volumique définit ainsi implicitement le volume de matériau élastomérique constitutif de la bande de roulement destiné à être usé. Il a également une incidence directe sur la surface de contact de la bande de roulement avec le sol et, par conséquent, sur les pressions de contact avec le sol qui conditionnent l'usure de la bande de roulement de la chenille.

Par « taux d'usure » de la bande de roulement, on entend le ratio entre une épaisseur que la bande de roulement a perdu par l'usure et l'épaisseur totale que la bande de roulement peut perdre avant de devoir être remplacée. Ainsi, un taux d'usure de 25% signifie que la bande de roulement a perdu un quart de l'épaisseur du matériau caoutchoutique à user.

Par « surface de roulement » d'une bande de roulement, on entend ici l'ensemble des points de la bande de roulement qui entrent en contact avec un sol lorsque la chenille roule sur ce sol.

Par « taux d'entaillement surfacique » d'une bande de roulement, on entend le ratio de creux présent sur la surface de roulement de cette bande de roulement. Ce taux d'entaillement surfacique est notamment généré par les rainures de la bande de roulement.

Le taux d'entaillement surfacique est en lien avec l'adhérence de la bande de roulement avec le sol. Ledit taux détermine la surface de caoutchouc en contact avec le sol pour assurer l'adhérence requise pour faire avancer le véhicule par transmission du couple moteur.

Un défaut d'adhérence se traduit par un glissement de la bande de roulement de la chenille qui correspond à un déplacement de la chenille sans un effort suffisant de traction.

Le taux de glissement, en pourcentage (%), correspond au rapport entre la vitesse réelle moins la vitesse théorique divisé par la vitesse réelle. Autrement dit, le taux de glissement est égal à (V_{réelle}-V_{théorique})/V_{réelle}. L'effort de traction par rapport au taux de glissement est une indication de la performance de la sculpture.

La dureté d'un mélange élastomérique après cuisson, tel que celui entrant dans la composition de la bande de roulement, est une des données mécaniques pour le caractériser. La dureté shore A se mesure selon la norme ASTM 2240 à l'aide d'un duromètre et traduit la résistance du mélange élastomérique à l'enfoncement d'un pénétrateur. La dureté shore A est d'autant plus élevée que le mélange est rigide. Pour concevoir une chenille en caoutchouc, le mélange élastomérique est sélectionné entre autres en fonction de sa dureté shore A qui doit être adaptée à la sculpture de la surface extérieure pour résister aux sollicitations de griffures, de déchirures compte tenu de la diversité d'usage du véhicule.

Pour comparer la performance en traction des sculptures des chenilles, on peut procéder à des tests de compression-cisaillement en laboratoire, sur des éprouvettes munies de ladite sculpture, sur sol meuble préalablement compacté. Le résultat du test montre l'évolution de l'effort de traction par rapport au taux de glissement de l'éprouvette.

Le test de cisaillement-compression réalisé sur les éprouvettes sur un sol meuble préalablement compacté comprend trois étapes :
i. une première étape de compaction de la terre dans un bac, préalablement foisonnée. La compaction est réalisée sous une pression de 0.7 bar ;
ii. une charge est appliquée sur l'éptrouvette de manière statique par l'apposition de masselotes ;
iii. un déplacement est imposé à l'éprouvette en commençant par une phase d'accélération de 0.5 m/s2, puis une phase en vitesse stabilisée réglable de 1 à 100 mm/s.

Le post-traitement du résultat de mesure permet de classer les sculptures comme le ferait un test de traction en conditions réelles en permettant d'accéder au potentiel de traction de la sculpture en fonction du glissement.

### ÉTAT DE LA TECHNIQUE

Les bandes de roulement des chenilles équipant les engins agricoles ou de génie civil comportent conventionnellement des blocs allongés appelés barrettes s'étendant du centre de la bande de roulement vers les épaules. Ces barrettes sont disposées de chaque côté du plan médian transversal de manière à former un motif en V, la pointe du motif en V (ou encore motif en chevron) étant destinée à entrer la première dans l'aire de contact avec le sol. Les barrettes sont espacées entre elles pour former des sillons ou rainures ; la largeur de ces sillons est déterminée de façon à permettre un bon fonctionnement à la fois sur route et sur terrain meuble. Les barrettes présentent une symétrie par rapport au plan médian transversal de la bande de roulement, avec le plus souvent un décalage entre les deux rangées de barrettes, similaire à celui obtenu par une rotation autour de l'axe de la chenille d'une moitié de la bande de roulement par rapport à l'autre moitié de la bande de roulement. En outre, les barrettes peuvent être continues ou discontinues, et réparties longitudinalement avec un pas constant ou variable. Les barrettes ont une face de contact destinée à rouler sur un sol rigide comme par exemple les routes empruntées pour se rendre à proximité des champs et une face d'attaque destinée à transmettre la force motrice lorsque l'engin agricole se déplace sur un terrain meuble, typiquement la terre des champs.

Les documents WO00/01570A1, DE2020672A1, et EP3133000A1 divulguent des exemples de chenilles pour améliorer la performance de traction.

Une insatisfaction récurrente concerne les performances de traction sur sol meuble des bandes de roulement connues. La productivité des véhicules comme par exemple, celle des engins agricoles, est directement liée à leur capacité de traction sur sol meuble. Améliorer cette performance permettrait à l'utilisateur d'améliorer non seulement le rendement de son matériel mais aussi de diminuer ses coûts d'exploitation, par exemple en réduisant la consommation de carburant par unité de surface exploitée. Naturellement, l'amélioration de la traction ne doit pas se faire au détriment d'autres performances comme par exemple la résistance à l'usure, le confort et la possibilité de rouler à vitesse suffisamment élevée sur route.

### BREF EXPOSE DE L'INVENTION

Cet objectif a été atteint, selon l'invention, par une chenille en caoutchouc formant une boucle fermée suivant une direction longitudinale (OX), ayant une largeur donnée selon une direction transversale (OY) et présentant une surface intérieure, destinée à coopérer avec des moyens d'entraînement, et une bande de roulement dont la surface extérieure est destinée à entrer en contact avec un sol, ayant un sens de rotation privilégié, ladite bande de roulement comprenant une sculpture formée de N d'éléments en reliefs en matériau élastomérique, destinés à venir en contact avec le sol pour assurer la motricité de la chenille, chaque élément de ladite sculpture s'étendant vers l'extérieur à partir d'une surface portante jusqu'à la surface extérieure, et comprenant une face de contact destinée à être en contact avec le sol et une face d'attaque destinée à transmettre des efforts, ladite face d'attaque de **n** éléments de sculpture, le nombre n étant au moins égal à **0,2×N,** étant inclinée d'un angle α compris entre 45 degrés et 75 degrés, par rapport à une direction (OZ) normale à la surface portante; la bande de roulement étant formée d'un matériau élastomérique dont la dureté shore A, mesurée selon la norme ASTM D2240, étant supérieure ou égale à 65 ; ladite chenille est caractérisée en ce que les blocs de sculpture comportent en outre des incisions transversales.

Le principe de l'invention est d'avoir une sculpture de la bande de roulement de la chenille polyvalente pour faire face aux usages du véhicule tant sur sol meuble que sur route asphaltée. Sur sol meuble, pour obtenir une bonne traction et donc un report de puissance optimal il faut que les blocs de sculpture puissent prendre appui sur la terre sur toute leur hauteur sans glissement. Selon l'invention, si au moins 20 % des blocs de sculpture ont une face d'attaque inclinée par rapport à la direction normale (OZ) d'un angle α compris entre 45 degrés et 75 degrés, alors la traction du véhicule est nettement améliorée.

Encore selon l'invention, la bande de roulement est formée d'un matériau élastomérique dont la dureté shore A, mesurée selon la norme ASTM D2240, est supérieure ou égale à 65.

Les blocs de sculpture en caoutchouc doivent être suffisamment rigides pour se cramponner au sol sans se fléchir afin de transmettre les efforts. En outre, les blocs de sculpture doivent résister aux griffures, d'une façon générale, à toutes les agressions de l'environnement lors de l'utilisation du véhicule. Pour cela, la dureté shore A doit être à un niveau approprié d'au moins 65 selon l'invention.

De préférence, l'angle α est compris entre 55 degrés et 65 degrés.

De préférence encore, le nombre **n** est au moins égal à 0,4 x **N.**

De préférence encore, la face d'attaque est principalement composée de deux surfaces, une première surface étant adjacente à la face de contact et une deuxième surface étant adjacente à la surface portante, l'angle d'inclinaison **α** étant celui de la droite de régression linéaire du profil de la face d'attaque, la première surface formant un angle α₁ avec la direction verticale Z, α₁ étant supérieur à α et compris entre 45° et 75°, une hauteur h de la première surface étant au moins égale à un tiers de la hauteur H du bloc de sculpture.

De préférence, les blocs de sculpture ont une base de quadrilatère et forment entre eux des rangées inclinées par rapport à la direction transversale.

Selon une première variante, les blocs de sculpture au sein de chaque rangée sont disposés de façon à ce que leurs faces d'attaque soient alignées entre elles.

Selon une deuxième variante, les blocs de sculpture au sein de chaque rangée sont disposés de façon à ce que les faces d'attaque de blocs adjacents soient décalées l'une par rapport à l'autre dans la direction longitudinale.

Dans cette deuxième variante, les blocs de sculpture au sein de chaque rangée sont de préférence disposés de façon à ce que, en partant du bloc le plus central de la bande de roulement, les arêtes avant des blocs successivement adjacents soient décalées dans la direction longitidunale et dans le sens inverse du sens de roulage d'un décalage **"a"** compris entre 45% et 65% du pas **"p"** de la sculpture.

Selon une troisième variante, les blocs de sculpture comportent en outre des incisions transversales.

Selon une quatrième variante de l'invention, les éléments de sculpture de la surface extérieure destinée à être en contact avec le sol sont des barrettes avec une face d'attaque qui s'étend sur toute la largeur transversale de la chenille.

Toujours selon la quatrième variante de l'invention, les éléments de sculpture de la bande de roulement sont des barrettes incurvées distribuées dans la direction longitudinale (OX) en deux rangées symétriques par rapport au plan transversal (XOZ), lesdites barrettes étant inclinées par rapport à la direction (OX) de manière à former des motifs en forme de chevrons orientés vers le centre de la bande de roulement de la chenille.

D'autres caractéristiques et avantages de l'invention ressortent de la description faite ci-après en référence au dessin annexé qui montre, à titre d'exemple non limitatif, une forme de réalisation de l'objet de l'invention.

### BREVE DESCRIPTION DES FIGURES

Les figures 1-A, et 1-B, représentent un premier mode de réalisation de l'invention. La sculpture de la bande de roulement est formée de blocs alignés. La figure 1-A est une vue en perspective, 1-B est une vue dans le plan transversal (OXZ).
Les figures 2-A, et 2-B, représentent un deuxième mode de réalisation de l'invention avec une vue en perspective **2-A,** et une vue **2-B** dans le plan de contact avec le sol (XOY).
La figure **3** est une vue partielle en perspective montrant un détail d'une bande de roulement de l'invention.
Les figures 4-A à 4-C sont des vues schématiques de détail du profil d'un bloc de sculpture de la bande de roulement de l'invention.
Les figures **5** à **7** sont des vues schématiques d'autres exemples de profils d'un bloc de sculpture de la bande de roulement de l'invention.
Les figures **8** et **9** sont des vues schématiques d'autres exemples de profils d'un bloc de sculpture de la bande de roulement de l'invention.
Les figures 10-A, 10-B sont relatives à une bande de roulement de la chenille formée de barrettes transversales. La figure 10-A est une vue en perspective, 10-B, une vue dans le plan transversal (OZX).
La figure 10-C représente une vue agrandie de la bande de roulement de la chenille. Les figures 10-A, 10-B et 10-C illustrent un quatrième mode de réalisation de l'invention avec des blocs de sculpture en forme de barrettes.
La figure **11** représente des résultats de performance pour deux modes de réalisations de l'invention en comparaison de l'état de l'art.

### DESCRIPTION DES FIGURES

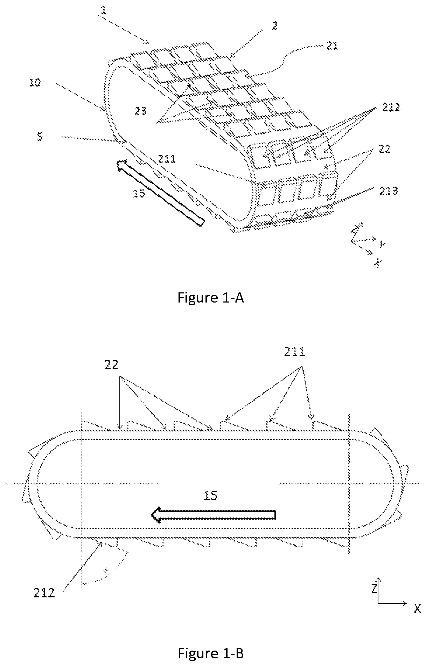

Sur les figures 1-A, et 1-B, on a représenté une chenille en caoutchouc désignée par la référence générale 1 comprenant une bande de roulement **2,** formant une boucle fermée suivant une direction longitudinale (OX), de largeur donnée dans une direction transversale (OY), présentant une surface intérieure **5** et une surface extérieure **10.** Ladite bande de roulement **2** est dotée d'une sculpture **21** formée d'une pluralité d'éléments en reliefs, destinés à venir en contact avec le sol pour assurer une bonne motricité au véhicule équipé de cette chenille **1** dont le sens de roulement préférentiel est indiqué par la flèche **15.**

Chaque élément de ladite sculpture **21** s'étend vers l'extérieur à partir d'une surface portante **22,** et comprend une face de contact **211** destinée à être en contact avec le sol, une face d'attaque **212** destinée à transmettre le couple moteur du véhicule en roulage, ladite face d'attaque **212** est inclinée d'un angle α, par rapport à la direction normale à la surface portante **22,** compris entre 45 degrés et 75 degrés.

Sur la figure 1-A, la sculpture **21** bande de roulement 2 comporte au total un nombre « **N »** de blocs séparés entre eux par des découpures longitudinales **23.** Chaque bloc comporte en particulier une face de contact **211,** une face d'attaque **212** et une face de fuite **213.** La face de contact est la face au sommet du bloc qui est destinée à rouler et porter la charge sur un sol rigide. Sur un sol meuble, les blocs peuvent s'enfoncer dans le sol. Dans le sens de roulement préférentiel de la chenille, la face d'attaque **212** est alors celle qui entre la première dans l'aire de contact et peut transmettre un effort moteur alors que la face de fuite est celle qui sort la dernière de l'aire de contact. La face de fuite **213** ne peut transmettre d'effort au sol que lors d'une phase de freinage ou de marche arrière.

La figure 1-B est une représentation de la section transversale de la chenille dans le plan (OXZ). Le centre géométrique de la chenille est désigné par la référence **3.** Cette vue permet de clairement visualiser l'orientation des faces d'attaque des blocs. Les faces d'attaque sont inclinées vers l'arrière par rapport à la direction normale à la surface de fond **22** selon le sens de roulement préférentiel indiqué par la flèche **15** et forment un angle **α** avec cette direction normale. Selon l'invention l'angle **α** est compris entre 45° et 75°. Sur cet exemple, l'angle **α** est de 60°.

Dans ce premier mode de réalisation, l'ensemble des blocs de la bande de roulement **2** ont des faces d'attaque inclinées selon un angle **α** entre 45° et 75°, c'est-à-dire que le nombre **n** des blocs qui respectent cette caractéristique d'inclinaison de leur face d'attaque est égal à **N.** Cependant, l'invention peut également être mise en oeuvre lorsqu'une partie seulement des blocs de la sculpture de la bande de roulement respectent cette caractéristique d'inclinaison. Par exemple, lorsque le nombre **n** de ces blocs est au moins égal à 0,2x**N**, c'est à dire qu'au moins 20% des blocs respectent cette caractéristique d'inclinaison de leur face d'attaque, le bénéfice en termes de traction sur sol meuble est déjà sensible.

Toujours dans ce premier mode de réalisation, les blocs sont disposés sur la largeur de la bande de roulement selon un motif à quatre blocs. Au sein de chaque rangée, les blocs sont disposés de sorte que leurs faces d'attaque sont alignées entre elles, c'est à dire qu'elles forment ensemble une quasi-continuité seulement interrompue par les découpures **23.** La bande de roulement représentée ici est parfaitement symétrique par rapport au plan transversal médian de la chenille. Dans une variante non représentée, les motifs des deux moitiés de la bande de roulement situées de part et d'autre du plan transversal médian peuvent au contraire être décalés l'une par rapport à l'autre selon la direction longitidunale comme c'est souvent le cas pour les sculptures à barrettes des pneus agricoles de l'état de la technique.

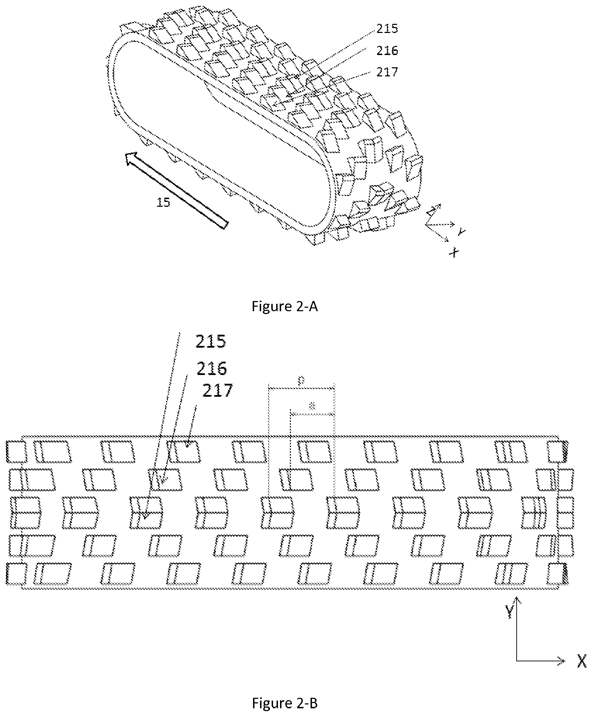

Les figures 2-A, et 2-B représentent un deuxième mode de réalisation d'une bande de roulement selon l'invention. Les blocs sont disposés sur la largeur de la bande de roulement selon un motif à cinq blocs. Les blocs centraux **215** présentent une double face d'attaque, chaque partie de cette double face d'attaque respectant la caractéristique d'inclinaison exposée plus haut. Les autres blocs sont similaires à ceux du mode de réalisation précédent et respectent également l'inclinaison décrite avec un angle **α** proche de 60°.

Dans ce deuxième mode de réalisation, la disposition des blocs diffère de celle du premier mode de réalisation principalement en ce que les blocs ne sont plus alignés au sein de chaque rangée mais plutôt disposés de façon à ce que les faces d'attaque de blocs adjacents soient décalées l'une par rapport à l'autre dans la direction longitidunale. Une manière de caractériser ce décalage est mieux visible sur la vue de la figure 2-B. Si l'on observe le pas « p » entre deux motifs successifs, le bloc intermédiaire **216** adjacent à un bloc central **215** et qui selon le sens de roulement de la chenille rentre dans l'aire de contact après ce bloc central est décalé d'une distance « a » dans le sens opposé au sens de roulement (flèches **15**). De préférence ce décalage « a » est compris entre 45% et 65% du pas « p ». Comme représenté sur la figure 2-B, la distance « p » entre deux blocs est mesurée entre l'arête avant du bloc le plus central (l'arête étant définie par l'intersection de la face d'attaque et de la face de contact) et l'arête avant du bloc adjacent qui selon le sens de roulement du pneu entre dans l'aire de contact après ledit bloc central. Le même principe de mesure s'applique pour chaque bloc successivement adjacent et pour les deux côtés de la bande de roulement. Un décalage similaire est donc également observé entre le bloc intermédiaire **216** et le bloc d'épaule **217.** La sculpture étant ici symétrique par rapport au plan équatorial médian de la chenille, la même règle s'applique pour les deux côtés de la bande de roulement.

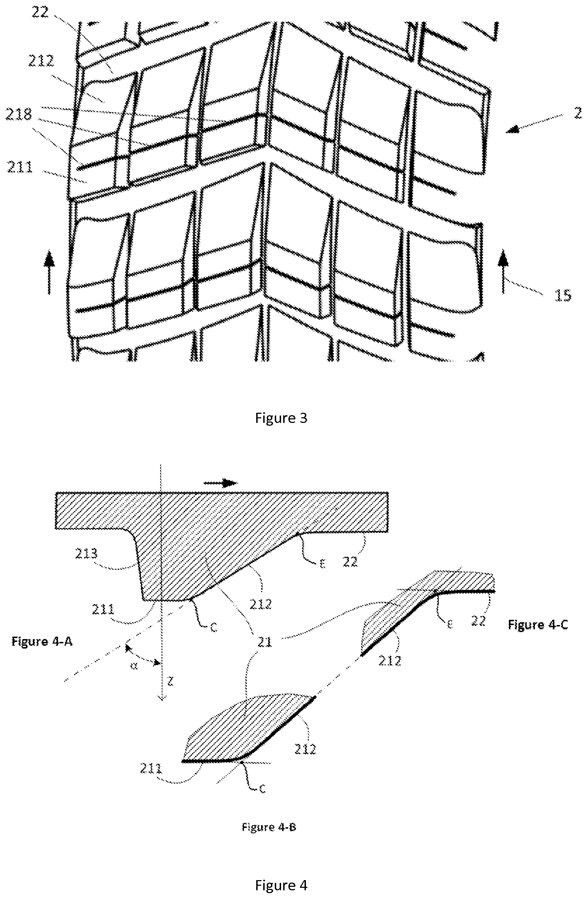

La figure **3** représente l'invention dans laquelle les blocs comportent en outre des incisions transversales **218.** Des incisions similaires sont naturellement compatibles avec d'autres modes de réalisation de l'invention.

Les figures 4-A à 4-C montrent à plus grande échelle un exemple de profil de blocs dont la face d'attaque **212** est reliée à la face de contact **211** et à la surface portante **22** par des congés de raccordement. Un point **C** est défini à l'intersection des prolongements de la face d'attaque et de la face de contact et un point **E** est défini à l'intersection des prolongements de la face d'attaque **212** et de la surface portante **22.** L'angle d'inclinaison **α** de la face d'attaque est alors l'angle que fait avec la direction normale à la surface portante 22, la droite passant par **C** et **E.**

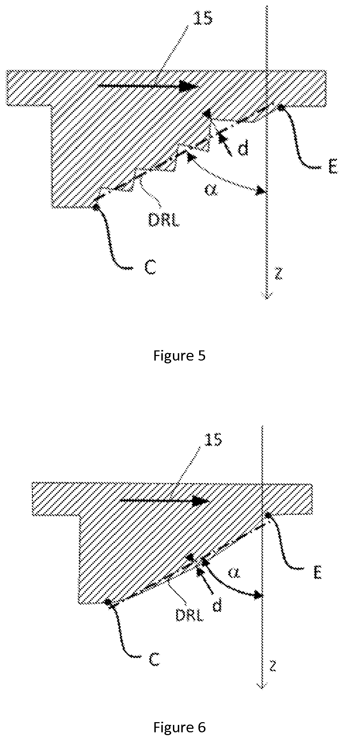

Les figures **5, 6** et **7** montrent des exemples de cas où la face d'attaque **212** n'est pas plane. Dans ce cas on considérera l'angle d'inclinaison **α** de la droite de régression linéaire **DRL** du profil de la face d'attaque entre les points **C** et **E** où la face d'attaque rejoint respectivement la face de contact **211** et la surface portante **22.** De préférence, la distance **d** séparant le profil de sa droite de régression linéaire **DRL** reste inférieure à 15 mm. La figure 5 représente un profil de la face d'attaque dit en dents de scie.

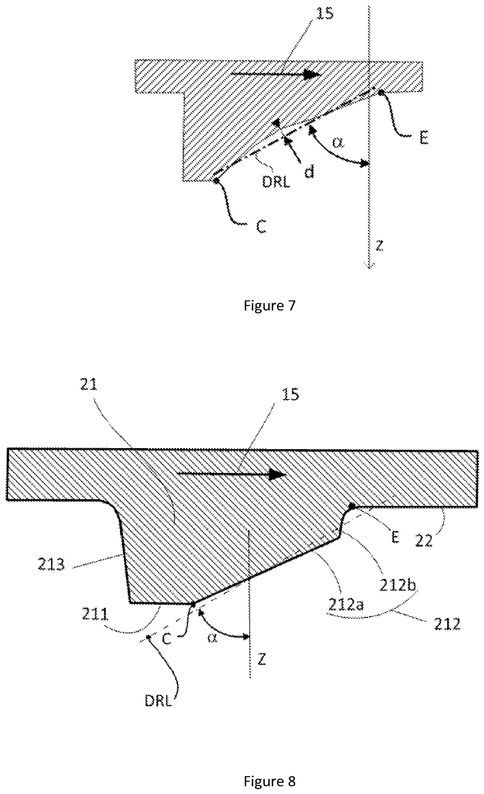

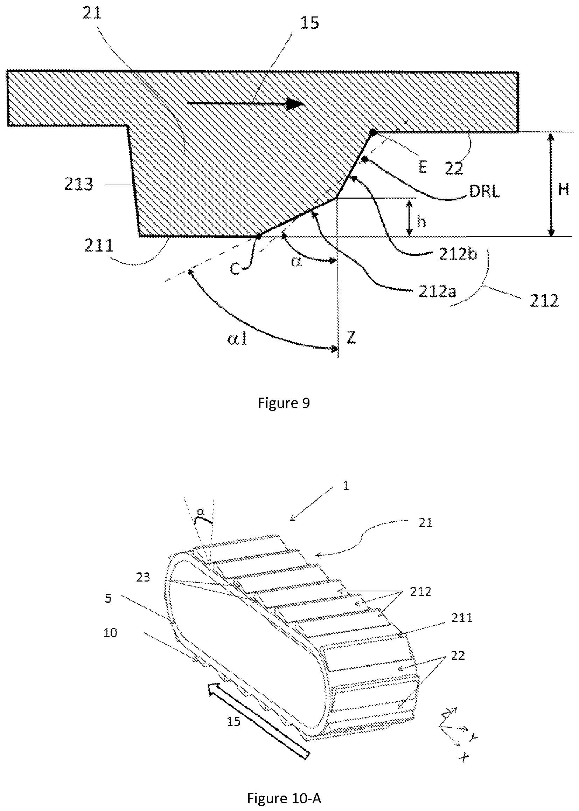

Les figures **8** et **9** montrent des cas où la face d'attaque **212** est principalement composée de deux surfaces, une première surface **212a** adjacente à la face de contact **211** et une deuxième surface **212b** adjacente à la surface portante **22.** Comme expliqué plus haut pour les figures 5 à 7, l'angle d'inclinaison α est celui de la droite de régression linéaire **DRL** du profil de la face d'attaque entre les points **C** et **E** où respectivement la première surface **212a** rejoint la face de contact **211** et la deuxième surface **212b** rejoint la surface portante **22.** L'angle α est compris entre 45° et 75° et de préférence entre 55° et 70°. La première surface **212a** forme quant à elle un angle α₁ avec la direction normale à la surface portante 22. Cet angle α₁ est supérieur à α et tout en restant également compris entre 45° et 75°. La hauteur verticale dans la direction de l'épaisseur de la chenille **h** de la première surface **212a** représente au minimum un tiers de la hauteur du bloc de sculpture **H.**

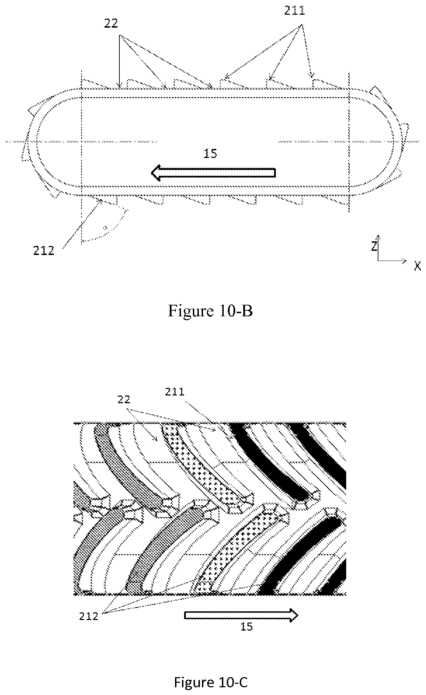

Les figures 10-A, 10-B représentent un mode de réalisation simplifié de l'invention où les blocs sont en réalité des barrettes étendues sur toute la largeur transversale de la bande de roulement 2.

La figure 10-C illustre sur un grossissement d'une sculpture avec des barrettes incurvées. C'est une variante du quatrième mode de réalisation de l'invention.Dans le cas représenté, il y a trois motifs de barrettes en gris, en foncé et en pointillé distribués par en couples de barrettes symétriques par rapport au plan transversal (XOZ). Les faces d'attaque **212** font l'angle α compris entre 45 degrés et 75 degrés, avec la direction normale à la surface portante **22.** Le sens de rotation de la chenille est indiqué par la flèche **15** orienté se l'axe longitudinal (OX).

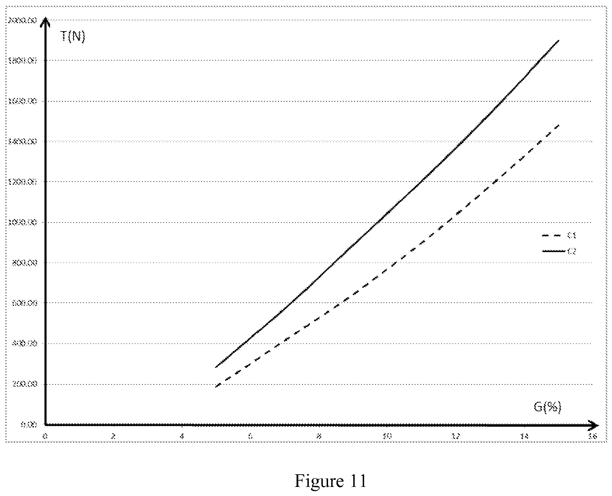

La performance de traction en fonction du glissement telle que définie plus haut a été évaluée sur des éprouvettes représentatives du mode de réalisation avec des barrettes, comme illustré aux figures **10****,** et du mode de réalisation tel que représenté sur la figure **5** avec une sculpture dite en dents de scie. Ces sculptures conformes à l'invention sont comparées à une sculpture à barrettes de l'état de l'art. La figure **11** représente les deux courbes de résultats C1, et C2. La courbe C1 en traits discontinus larges correspond aux résultats de l'état de l'art, la courbe C2 en traits discontinus serrés représente les résultats pour la sculpture du mode de réalisation des figures 10-A et 10-B. L'axe des abcisses représente le taux de glissement G en %, et l'axe des ordonnées représentent l'effort de traction en Newton T(N). Les résultats montrent qu'au-delà de 5% de glissement, la sculpture à barrettes selon le mode de réalisation des figures 10-A et 10-B de l'invention est plus performante de 51% que la sculpture de l'état de l'art. Le gain étant encore de 28% à 15 % de glissement.

Selon les inventeurs, un taux d'entaillement volumique de la sculpture de la bande de roulement supérieur ou égale à 30% garantit un bon fonctionnement de l'invention. De même qu'un taux d'entaillement surfacique inférieur à 70 % permet d'obtenir une adhérence sur route asphaltée optimale.

L'invention ne saurait être limitée à ces seuls exemples de réalisation décrits et diverses modifications peuvent y être apportées tout en restant dans le cadre tel que défini par les revendications.

## Revendications

1. Chenille (1) en caoutchouc formant une boucle fermée suivant une direction longitudinale (OX), ayant une largeur donnée selon une direction transversale (OY) et présentant une surface intérieure (5), destinée à coopérer avec des moyens d'entraînement, et une bande de roulement (2) dont la surface extérieure (10) est destinée à entrer en contact avec un sol, ayant un sens de rotation privilégié (15), ladite bande de roulement (2) comprenant une sculpture (21) formée de N d'éléments en reliefs en matériau élastomérique, destinés à venir en contact avec le sol pour assurer la motricité de la chenille (1), chaque élément de ladite sculpture (21) s'étendant vers l'extérieur à partir d'une surface portante (22) jusqu'à la surface extérieure (10), et comprenant une face de contact (211) destinée à être en contact avec le sol et une face d'attaque (212) destinée à transmettre des efforts, ladite face d'attaque de n éléments de sculpture, le nombre n étant au moins égal à 0,2xN, est inclinée d'un angle α compris entre 45 degrés et 75 degrés, par rapport à une direction (OZ) normale à la surface portante, la bande de roulement (2) étant formée notamment d'un matériau élastomérique dont la dureté shore A, mesurée selon la norme ASTM D2240, est supérieure ou égale à 65, ladite chenille (1) **est caractérisée en ce que** les blocs de sculpture comportent en outre des incisions transversales (218).

2. Chenille (1) selon la revendication 1 **dans laquelle** l'angle **α** est compris entre 55 degrés et 70 degrés.

3. Chenille (1) selon l'une quelconque des revendications 1 à 2 **dans laquelle** le nombre **n** est au moins égal à **0,4 × N.**

4. Chenille (1) selon l'une quelconque des revendications de 1 à 3 **dans laquelle** la face d'attaque (212) est principalement composée de deux surfaces, une première surface (212a) étant adjacente à la face de contact (211) et une deuxième surface (212b) étant adjacente à la surface portante (22), l'angle d'inclinaison **α** étant celui de la droite de régression linéaire (DRL) du profil de la face d'attaque, la première surface (212a) formant un angle **α₁** avec la direction verticale Z, **α₁** étant supérieur à **α** et compris entre 45 degrés et 75 degrés, une hauteur **h** de la première surface (212a) étant au moins égale à un tiers de la hauteur **H** du bloc de sculpture.

5. Chenille (1) selon l'une quelconque des revendications 1 à 4 **dans laquelle** les blocs de sculpture ont une base de quadrilatère et forment entre eux des rangées inclinées par rapport à la direction transversale (OY).

6. Chenille (1) selon la revendication **5 dans laquelle** les blocs de sculpture au sein de chaque rangée sont disposés de façon à ce que leurs faces d'attaque (212) soient alignées entre elles.

7. Chenille (1) selon la revendication **5 dans laquelle** les blocs de sculpture au sein de chaque rangée sont disposés de façon à ce que les faces d'attaque de blocs adjacents (215, 216, 217) soient décalées l'une par rapport à l'autre dans la direction longitudinale (OX).

8. Chenille (1) selon la revendication **7 dans laquelle** les blocs de sculpture au sein de chaque rangée sont disposés de façon à ce que, en partant du bloc le plus central de la bande de roulement (2), les arêtes avant des blocs successivement adjacents (215, 216, 217) soient décalées dans la direction longitudinale et dans le sens inverse du sens de roulage d'un décalage « **a** » compris entre 45% et 65% du pas « **p** » de la sculpture.

9. Chenille (1) selon l'une des revendications 1 à 3 **dans laquelle** les éléments de sculpture de la bande de roulement (2) sont des barrettes ayant une face d'attaque (212) qui s'étend sur toute la largeur de la chenille, selon la direction transversale (OY).

10. Chenille (1) selon l'une des revendications 1 à 3 **dans laquelle** les éléments de sculpture de la bande de roulement (2) sont des barrettes incurvées distribuées dans la direction longitudinale (OX) en deux rangées symétriques par rapport au plan transversal (XOZ), lesdites barrettes étant inclinées par rapport à la direction (OX) de manière à former des motifs en forme de chevrons orientés vers le centre de la bande de roulement (2) de la chenille (1).

## Patentansprüche

1. Raupe (1) aus Gummi, die eine geschlossene Schleife gemäß einer Längsrichtung (OX) bildet, eine gegebene Breite gemäß einer Querrichtung (OY) aufweist und über eine Innenoberfläche (5), die dazu bestimmt ist, mit Antriebsmitteln zusammenzuwirken, und eine Lauffläche (2), deren Außenoberfläche (10) dazu bestimmt ist, mit einem Boden in Kontakt zu kommen, verfügt, mit einer bevorzugten Drehrichtung (15), wobei die Lauffläche (2) ein Profil (21) beinhaltet, das aus N Reliefelementen aus einem elastomeren Material gebildet ist, die dazu bestimmt sind, mit dem Boden in Kontakt zu kommen, um die Bewegungsfähigkeit der Raupe (1) sicherzustellen, wobei sich jedes Element des Profils (21) von einer Tragfläche (22) bis zu der Außenoberfläche (10) nach außen erstreckt und eine Kontaktfläche (211), die dazu bestimmt ist, mit dem Boden in Kontakt zu sein, und eine Angriffsfläche (212), die dazu bestimmt ist, Kräfte zu übertragen, beinhaltet, wobei die Angriffsfläche von n Profilelementen, wobei die Anzahl n mindestens gleich 0,2xN ist, in Bezug auf eine zu der Tragfläche senkrechte Richtung (OZ) um einen Winkel α zwischen 45 Grad und 75 Grad geneigt ist, wobei die Lauffläche (2) insbesondere aus einem elastomeren Material gebildet ist, dessen Shore-A-Härte, gemessen gemäß der Norm ASTM D2240, größer als oder gleich 65 ist, wobei die Raupe (1) **dadurch gekennzeichnet ist, dass** die Profilblöcke ferner querverlaufende Einschnitte (218) umfassen.

2. Raupe (1) nach Anspruch 1, wobei der Winkel α zwischen 55 Grad und 70 Grad beträgt.

3. Raupe (1) nach einem beliebigen der Ansprüche 1 bis 2, wobei die Anzahl n mindestens gleich 0,4 x N ist.

4. Raupe (1) nach einem beliebigen der Ansprüche 1 bis 3, wobei die Angriffsfläche (212) im Wesentlichen aus zwei Oberflächen besteht, wobei eine erste Oberfläche (212a) an die Kontaktfläche (211) angrenzt und eine zweite Oberfläche (212b) an die Tragfläche (22) angrenzt, wobei der Neigungswinkel α derjenige der linearen Regressionsgeraden (DRL) des Profils der Angriffsfläche ist, wobei die erste Oberfläche (212a) einen Winkel α₁ mit der vertikalen Richtung Z bildet, wobei α₁ größer als α ist und
zwischen 45 Grad und 75 Grad beträgt, wobei eine Höhe h der ersten Oberfläche (212a) mindestens gleich einem Drittel der Höhe H des Profilblocks ist.

5. Raupe (1) nach einem beliebigen der Ansprüche 1 bis 4, wobei die Profilblöcke eine viereckige Basis aufweisen und untereinander Reihen bilden, die in Bezug auf die Querrichtung (OY) geneigt sind.

6. Raupe (1) nach Anspruch 5, wobei die Profilblöcke innerhalb jeder Reihe so angeordnet sind, dass ihre Angriffsflächen (212) untereinander ausgerichtet sind.

7. Raupe (1) nach Anspruch 5, wobei die Profilblöcke innerhalb jeder Reihe so angeordnet sind, dass die Angriffsflächen von benachbarten Blöcken (215, 216, 217) in der Längsrichtung (OX) zueinander versetzt sind.

8. Raupe (1) nach Anspruch 7, wobei die Profilblöcke innerhalb jeder Reihe so angeordnet sind, dass, ausgehend von dem mittigsten Block der Lauffläche (2), die Vorderkanten der aufeinanderfolgenden benachbarten Blöcke (215, 216, 217) in der Längsrichtung und in der zu der Rollrichtung umgekehrten Richtung um einen Versatz "a" versetzt sind, der zwischen 45 % und 65 % des Abstands "p" des Profils beträgt.

9. Raupe (1) nach einem der Ansprüche 1 bis 3, wobei die Profilelemente der Lauffläche (2) Stollen sind, die eine Angriffsfläche (212) aufweisen, die sich gemäß der Querrichtung (OY) über die gesamte Breite der Raupe erstreckt.

10. Raupe (1) nach einem der Ansprüche 1 bis 3, wobei die Profilelemente der Lauffläche (2) gebogene Stollen sind, die in der Längsrichtung (OX) in zwei symmetrischen Reihen in Bezug auf die Querebene (XOZ) verteilt sind, wobei die Stollen in Bezug auf die Richtung (OX) geneigt sind, sodass sie Fischgrätenmuster bilden, die zu der Mitte der Lauffläche (2) der Raupe (1) hin orientiert sind.

## Claims

1. Rubber caterpillar track (1) forming a closed loop in a longitudinal direction (OX) having a given width in a transverse direction (OY) and having an interior surface (5) intended to collaborate with drive means, and a tread (2) of which the exterior surface (10) is intended to come into contact with the ground, having a preferred direction of running indicated by the arrow (15), said tread (2) comprising a tread pattern (21) formed of N relief elements made of an elastomeric material which are intended to come into contact with the ground in order to give the caterpillar track (1) traction, each element of said tread pattern (21) extending outwards from a bearing surface (22) as far as the exterior surface (10) and comprising a contact face (211) intended to be in contact with the ground and a leading face (212) intended to transmit force, said leading face of n tread pattern elements, the number n being at least equal to 0.2xN, is inclined by an angle α comprised between 45 degrees and 75 degrees with respect to a direction (OZ) normal to the bearing surface,
the tread (2) is notably made of an elastomeric material of which the shore A hardness, measured in accordance with the standard ASTM D2240, is greater than or equal to 65, **characterized in that** the tread pattern blocks further comprise transverse sipes (218).

2. Caterpillar track (1) according to Claim 1, **wherein** the angle **α** is comprised between 55 degrees and 70 degrees.

3. Caterpillar track (1) according to either of Claims 1 and 2, **wherein** the number **n** is at least equal to **0.4×N.**

4. Caterpillar track (1) according to any one of Claims 1 to 3, **wherein** the leading face (212) is made up mainly of two surfaces, a first surface (212a) being adjacent to the contact face (211) and a second surface (212b) being adjacent to the bearing surface (22), the angle of inclination **α** being that of the linear regression line (DRL) of the profile of the leading face, the first surface (212a) forming an angle **α₁** with the vertical direction Z, **α₁** being greater than **α** and comprised between 45 degrees and 75 degrees, a height **h** of the first surface (212a) being at least equal to one third of the height **H** of the tread pattern block.

5. Caterpillar track (1) according to any one of Claims 1 to 4, **wherein** the tread pattern blocks have a quadrilateral base and form, between one another, rows that are inclined with respect to the transverse direction (OY).

6. Caterpillar track (1) according to Claim 5, **wherein** the tread pattern blocks within each row are disposed such that their leading faces (212) are aligned with one another.

7. Caterpillar track (1) according to Claim 5, **wherein** the tread pattern blocks within each row are disposed such that the leading faces of adjacent blocks (215, 216, 217) are offset with respect to one another in the longitudinal direction (OX).

8. Caterpillar track (1) according to Claim 7, **wherein** the tread pattern blocks within each row are disposed such that, starting from the most central block of the tread (2), the front edge corners of the successively adjacent blocks (215, 216, 217) are offset in the longitudinal direction and in the opposite direction to the direction of running by an offset **"a"** of between 45% and 65% of the pitch spacing **"p"** of the tread pattern.

9. Caterpillar track (1) according to one of Claims 1 to 3, **wherein** the tread pattern elements of the tread (2) are lugs having a leading face (212) which extends across the entire width of the track, in the transverse direction (OY).

10. Caterpillar track (1) according to one of Claims 1 to 3, **wherein** the tread pattern elements of the tread (2) are curved lugs distributed in the longitudinal direction (OX) in two rows that are symmetrical with respect to the transverse plane (XOZ), said lugs being inclined with respect to the direction (OX) so as to form chevron patterns oriented towards the centre of the tread (2) of the caterpillar track (1).
